# EUROPEAN PATENT SPECIFICATION

(11) **EP 0 835 965 B1**
(45) Date of publication and mention of the grant of the patent: **16.05.2001**
(21) Application number: 97117768.8
(22) Date of filing: 14.10.1997
(51) Int. Cl.: E04B 1/41, F16B 15/04

(54) **Anchor for foamed concrete**
Verankerung in Porenbeton
Ancrage pour béton cellulaire

(30) Priority: 14.10.1996 JP 27070396
(43) Date of publication of application: 15.04.1998
(73) Proprietor: WAKAI & CO., LTD., Higashiosaka-shi, Osaka (JP)
(72) Inventor: Wakai, Takao, c/o Wakai & Co., Ltd., Higashi Osaka, Osaka (JP)
(74) Representative: Glawe, Delfs, Moll & Partner

(56) References cited:
- WO-A-80/02185
- GB-A- 1 526 555
- GB-A- 2 211 220
- GB-A- 2 282 159
- US-A- 2 262 130
- US-A- 3 389 525
- SELL R: "BEWEHRUNGS-, VERBINDUNGS- UND BEFESTIGUNGSMITTEL FUER PORENBETON REINFORCING-, CONNECTING- AND FIXING DEVICES FOR CELLULAR CONCRETE" BETONWERK + FERTIGTEIL TECHNIK, vol. 59, no. 1, 1 January 1993, pages 100-105, XP000336607

## Description

This invention relates to an anchor for fixedly connecting a perforated brick to a foamed concrete block to build a house wall.

There is known a house wall structure comprising an outer wall member and an inner wall member which are constructed by stacking foamed concrete blocks and perforated bricks, respectively. The outer wall of foamed concrete blocks and the inner wall of perforated bricks have to be fixed together at their butt portions.

Conventional perforated bricks are sintered blocks about 25 cm high, 30 cm across and 60 cm long, with numerous holes formed extending from top to bottom. Foamed concrete blocks are of about the same size as perforated bricks.

Thus, the top surface of each of stacked perforate bricks is at the same level as the top surface of each of stacked foamed concrete blocks.

In order to couple the outer wall of foamed concrete blocks to the inner wall of perforated bricks, flat connecting plates are placed across the flush top surfaces of the perforated bricks and foamed concrete blocks so as to be buried in mortar applied between the vertically adjacent bricks and blocks. When the mortar hardens, the respective brick and block are fixed together at their butt portions.

Although a perforated brick is of the same size as a foamed concrete block, the former is far heavier than the latter. Thus, there are many bricklayers who complain of backaches. To solve this problem, perforated bricks having a reduced weight by reducing their height from 25 cm to 20 cm are now widely used.

When such new type lightweight bricks are stacked, their top surfaces cannot be flush with top surfaces of stacked foamed concrete blocks, so that they cannot be coupled together with conventional connecting plates.

A known anchor for use with foamed concrete (WO-A-80/02185) comprises an anchor body formed of a pair of metal plates having tapered portions at tips of one end thereof and superposed one of the other so that the tapered portions face each other, said metal plates being fixed together at the other end thereof to provide a driving portion. Such an anchor can be driven into foamed concrete where the two metal plates are spread apart when the anchor is driven into foamed concrete, such securely holding the anchor. One embodiment is either determined to be an anchor which protrudes from the wall with holes and to which wires or other elements can be fixed (Figs. 4 and 5) or fixes an element in similar way as an ordinary nail (Figs. 7 - 9). This can not be used for the initially mentioned purposes.

Another previously known anchor (US-A-2262130) comprises a nail which can be driven into a wooden wall. A flexible element can be bent and fixed between two layers of bricks with mortar. This element cannot be used to drive the nail into foamed concrete because the nail easily would become loose.

An object of this invention is to provide an anchor for foamed concrete which can strongly and reliably connect a perforated block to a longer foamed concrete block at their butt portions.

According to the invention, there is provided an anchor for use with foamed concrete comprising an anchor body formed of a pair of metal plates having tapered portions at tips at one end thereof and superposed one on the other so that said tapered portions face each other, said metal plates being fixed together at the other end thereof to provide a driving portion,
characterized by an elongated metal sheet having one end thereof fixed to said other end of said anchor body with one side surface of said metal sheet superposed on and welded to an exposed side surface of one of said two metal plates, so that said metal sheet and said anchor body form a straight assembly, said metal sheet being made of a bendable material and formed with a plurality of holes.

According to the invention, there is also provided an anchor for use with foamed concrete comprising an anchor body formed of a pair of metal plates having tapered portions at tips at one end thereof and superposed one on the other so that said tapered portions face each other, said metal plates being fixed together, characterized in that said anchor body is formed of a short metal plate and a front portion of a long metal plate superposed on said short metal plate having the other or rear end thereof fixed to said long metal plate to provide a driving portion, and a bendable portion formed of a rear portion of said long metal plate protruding rearwardly from the rear end of said short metal plate.

As mentioned above, the two anchors of the state of the art cannot solve the object to strongly and reliably connect a foamed concrete block with perforated blocks. The inventive anchor body and the metal strip are coupled together by welding their side surfaces together in a face-to-face manner. The anchor thus extends substantially in a straight line before use. A plurality of such straight flat anchored can be stacked neatly one on another without taking up so much space, so that they are easy to store, transport and handle. When used, the metal sheet is bent. After the anchor body is driven into the foamed concrete, the metal strip is straightened. By the provision of holes in the metal, mortar enter the holes and hardens thus strongly binding the anchor.

The metal plates of the anchor body may be fixedly connected together by spot welding. The bendable member, too, may be fixed to the anchor body by spot welding. The anchor body is driven into a foamed concrete block with the bendable portion bent by about 90° so that the driving portion protrudes rearwardly and by striking the rear end of the driving portion with a hammer. As the anchor body is driven into the concrete block, its metal plates will spread in the concrete, increasing the resistance to pulling force of the anchor body.

Other features and objects of the present invention will become apparent from the following description made with reference to the accompanying drawings, in which:

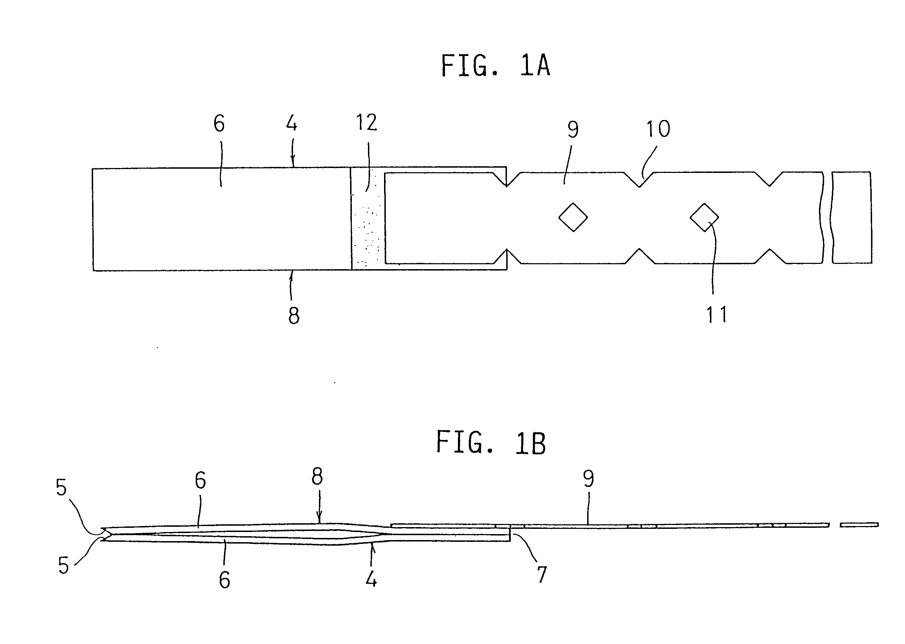

Fig. 1A is a plan view of an anchor;
Fig. 1B is a side view thereof;

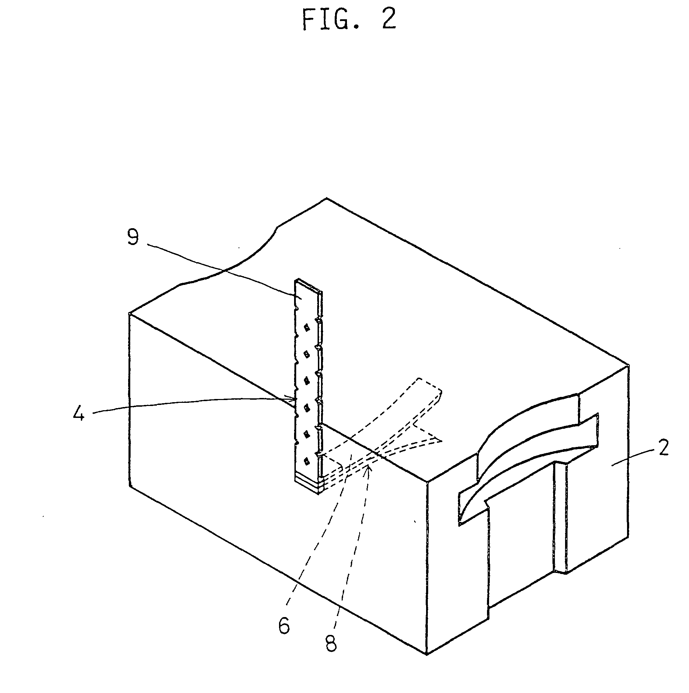

Fig. 2 is a perspective view showing how the anchor is driven into a foamed concrete block;

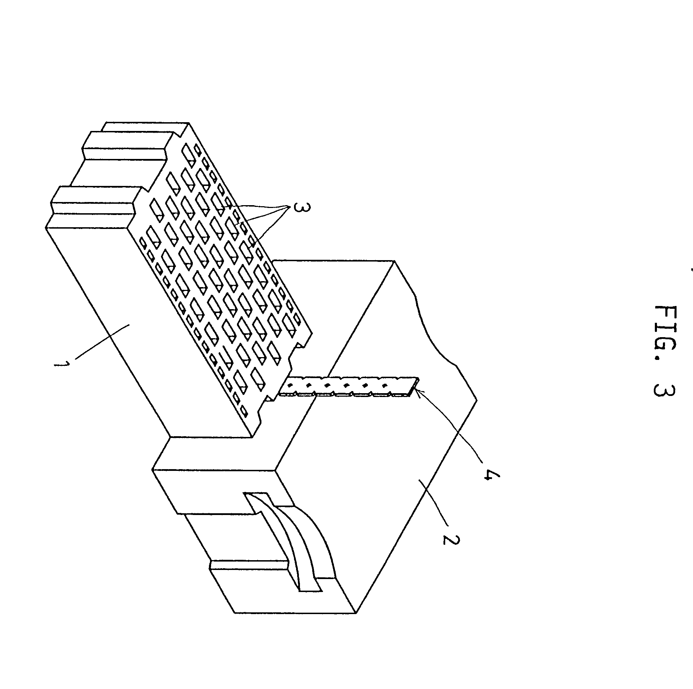

Fig. 3 is a perspective view of the foamed concrete block, the anchor completely driven into the concrete block, and a perforated brick;

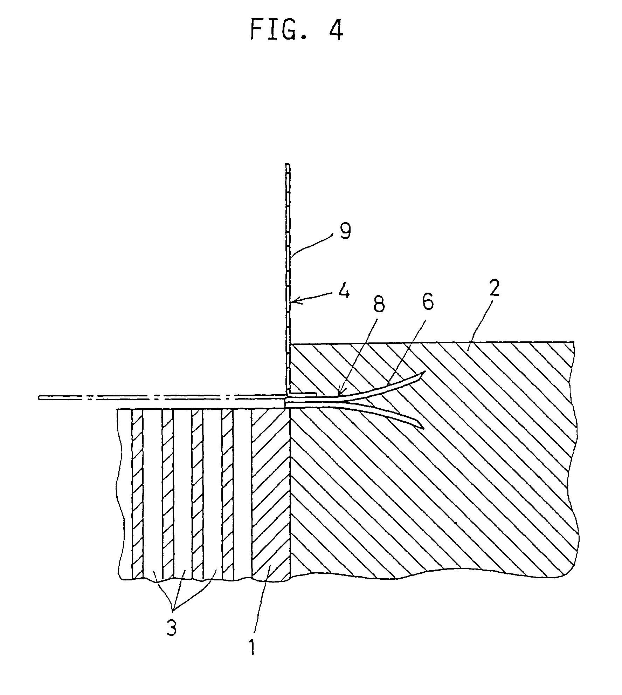

Fig. 4 is a vertical sectional view of Fig. 3; and

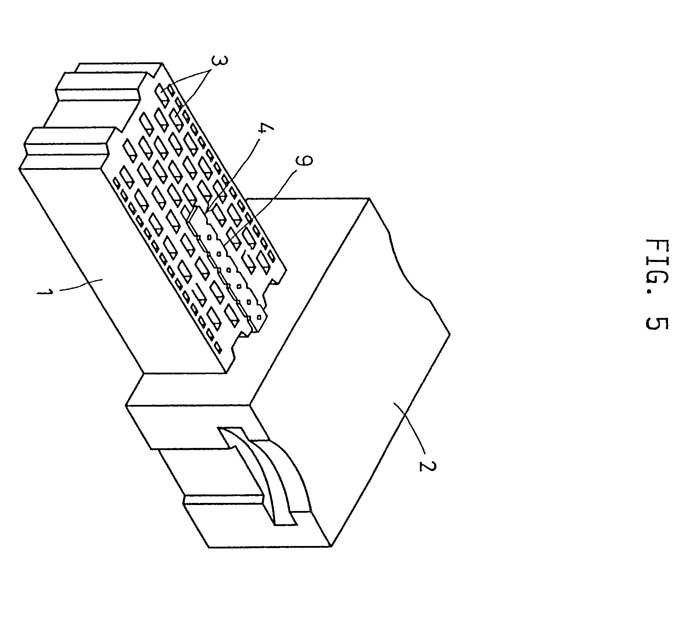

Fig. 5 is a perspective view of a bendable member as placed on the perforated brick;

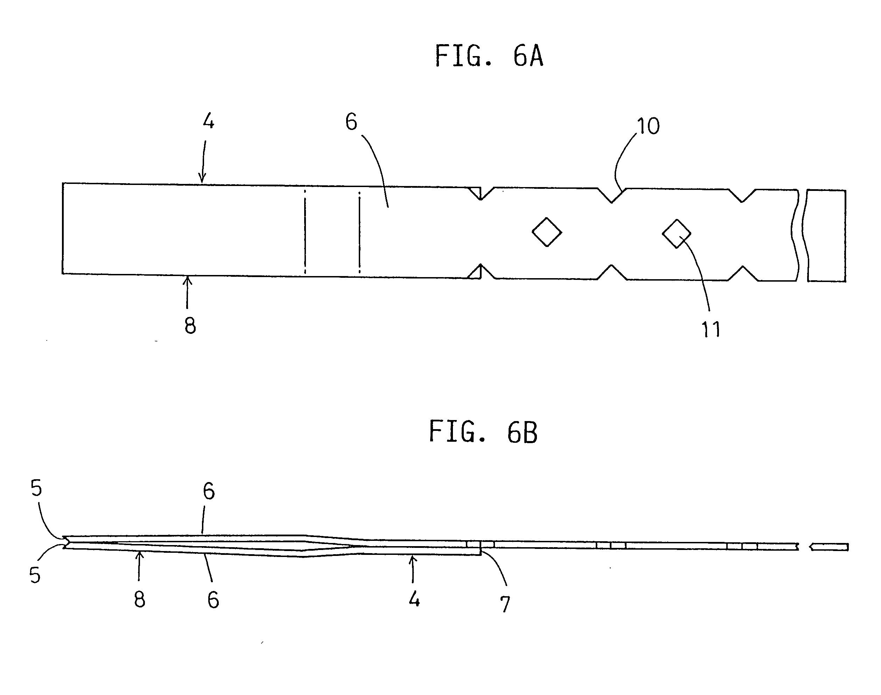

Fig. 6A is a plan view of another example of the anchor; and
Fig. 6B is a side view thereof.

An embodiment of this invention is described with reference to the drawings.

As shown in Figs. 3 - 5, a perforated brick 1 and a foamed concrete block are coupled together by an anchor according to this invention. The perforated brick 1, about 20 cm high, 30 cm across and 60 cm long, is formed by sintering clay with numerous holes 3 formed extending from top to bottom.

The foamed concrete block 2 is about 25 cm high, 30 cm across and 60 cm long.

Referring to Figs. 1A, 1B, the anchor 4 includes an anchor body 8 comprising two metal strips 6 having at their tips tapered portions 5 facing each other and at rear ends driving portions 7 which are spot-welded or otherwise fixed together. A strip-shaped, metallic bendable member 9 is fixed to the rear end of the anchor body 8 so as to extend rearwardly from the body 8.

The bendable member 9 is a metal strip having its front end superposed on and spot-welded to one of the metal strips 6 of the anchor body 8. Its portion protruding rearwardly from the rear end of the body 8 is shorter than the lateral dimension of the perforated brick 1.

The bendable member 9 has cutouts 10 along both side edges at predetermined intervals, and is also formed with punched holes 11 at predetermined intervals along its longitudinal centerline. The cutouts 10 and the holes 11 serve to increase the bond strength between the bendable member 9 and mortar applied to the perforated brick 1. The cutouts 10 also make it easy to bend the bendable member 9. In order that the bendable member 9 can be bent at a right angle near the rear end of the anchor body 8, the frontmost pair of cutouts 10 are provided at the portion of the bendable member 9 superposed on the rear edge of the anchor body 8.

In the illustrated example, the metal strips 6 of the anchor body 8 are slightly bent at portions near their rear ends so that their tips are pressed against each other. A marking 12 is provided on the anchor body 8 near its rear end to allow visual checking on how deep the anchor body 8 is driven into the foamed concrete block 2.

As shown in Figs. 6A and 6B, an anchor of an alternate embodiment may include an anchor body comprising a long and a short metal strip having their tapered portions at the tips facing each other. The short metal strip has its rear end or driving portion spot-welded to the longer metal strip. The portion of the longer strip protruding from the rear end of the short strip is used as a bendable member in which are formed cutouts and holes similar to those shown in the figures.

Now description is made on how to use the anchor according to this invention.

In order to fix a foamed concrete block 2 to a perforated brick 1 at their butt portions during the step of constructing an inner wall and an outer wall by stacking the perforated bricks 1 and the foamed concrete blocks 2, respectively, as shown in Figs. 2 and 3, the bendable member 9 is bent at a right angle with respect to the anchor body 8 at its front portion superposed on the anchor body 8 so that the rear end or driving portion 7 of the anchor body 8 protrudes downwardly of the bendable member 9.

In this state, with the anchor 4 placed on the perforated brick 1, the driving portion 7 of the anchor body 8 is struck with a hammer to drive the anchor body 8 into the foamed concrete block 2.

While the anchor body 8 is being driven into the foamed concrete block 2, the metal strips 6 are moved away from each other guided by the tapered ends 5, as shown by solid lines in Fig. 4. Thus, when the anchor body 8 is driven in to the point where there is the marking 12, the resistance to pulling force increases to a sufficient level due to the spreading of the metal strips.

As shown by solid lines in Fig. 4, when the anchor body 8 has been fully driven into the foamed concrete block 2, the vertically bent portion of the bendable member 9 is pivoted back to the horizontal position as shown by chain line in Fig. 4.

In this state, mortar is applied to the top of the perforated brick 1, and another perforated brick 1 is placed thereon to bury the bendable member 9 in the mortar. When the mortar sets, the bendable member 9 is fixed to the perforated brick 1. The foamed concrete block 2 is thus fixed to the perforated brick 1 by the anchor 4. Every time a perforated brick 1 is stacked, the block 1 is coupled to a corresponding concrete block by an anchor of the invention.

Thus, even though the perforated brick 1 and the foamed concrete block 2 are of different heights, they can be connected together by driving the anchor body 8 into the foamed concrete block 2 and embedding the bendable member 9 in mortar applied to the top of the perforated brick 1.

As described above, according to the present invention, as the anchor body is driven into a foamed concrete block, its metal strips separate from each other. Thus, once completely driven in, the anchor strongly resists pulling forces.

## Claims

1. An anchor (4) for use with foamed concrete comprising an anchor body (8) formed of a pair of metal plates (6) having tapered portions (5) at tips at one end thereof and superposed one on the other so that said tapered portions (5) face each other, said metal plates (6) being fixed together at the other end thereof to provide a driving portion (7), characterized by an elongated metal sheet (9) having one end thereof fixed to said other end of said anchor body (8) with one side surface of said metal sheet (9) superposed on and welded to an exposed side surface of one of said two metal plates (6), so that said metal sheet (9) and said anchor body (8) form a straight assembly, said metal sheet (9) being made of a bendable material and formed with a plurality of holes (11).

2. An anchor (4) for use with foamed concrete comprising an anchor body (8) formed of a pair of metal plates (6) having tapered portions (5) at tips at one end thereof and superposed one on the other so that said tapered portions (5) face each other, said metal plates (6) being fixed together, characterized in that said anchor body (8) is formed of a short metal plate (6) and a front portion of a long metal plate (6) superposed on said short metal plate (6) said short metal plate having the other or rear end thereof fixed to said long metal plate (6) to provide a driving portion (7), and a bendable portion formed of a rear portion of said long metal plate (6) protruding rearwardly from the rear end of said short metal plate (6).

3. An anchor as claimed in claim 1 or 2, characterized in that said driving portion (7) of said anchor body (8) is adapted to protrude rearwardly from said bendable member (9) or portion when said bendable member (9) or portion is bent at an angle of about 90°.

4. An anchor as claimed in claim 2 or 3, characterized in that said bendable member (9) or portion (6) is formed with a plurality of holes.

5. An anchor as claimed in any of claims 1 - 4, characterized in that said bendable member (9) or portion is formed with a plurality of cutouts (10).

## Patentansprüche

1. Anker (4) für die Verwendung mit Porenbeton, der einen Ankerhauptteil (8) aufweist, der aus zwei Metallplatten (6) gebildet ist, die mit abgeschrägten Bereichen (5) an den Spitzen an ihrem einen Ende versehen sind und so übereinander angeordnet sind, daß die abgeschrägten Bereiche (5) aufeinanderzu gerichtet sind, welche Metallplatten (6) an ihrem anderen Ende aneinander befestigt sind, um einen Eintreibbereich (7) zu bilden, gekennzeichnet durch ein längliches Metallblech (9), das mit einem seiner Enden an dem anderen Ende des Ankerhauptteils (8) befestigt ist, wobei eine Seitenoberfläche des Metallblechs (9) über einer frei liegenden Seitenoberfläche einer der beiden Metallplatten (6) angeordnet ist und daran angeschweißt ist, so daß das Metallblech (9) und der Ankerhauptteil (8) eine gerade Anordnung zu bilden, wobei das Metallblech (9) aus einem biegbaren Material hergestellt ist und mit einer Mehrzahl von Löchern (11) ausgebildet ist.

2. Anker (4) für die Verwendung mit Porenbeton, der einen Ankerhauptteil (8) aufweist, der aus zwei Metallplatten (6) gebildet ist, die mit abgeschrägten Bereichen (5) an den Spitzen an ihrem einen Ende versehen sind und so übereinander angeordnet sind, daß die abgeschrägten Bereiche (5) aufeinanderzu gerichtet sind, welche Metallplatten (6) an ihrem anderen Ende aneinander befestigt sind, dadurch gekennzeichnet, daß der Ankerhauptteil (8) aus einer kurzen Metallplatte (6) und dem vorderen Bereich einer langen Metallplatte (6), die der kurzen Metallplatte (6) überlagert ist, wobei die kurze Metallplatte (6) mit ihrem anderen oder hinteren Ende an der langen Metallplatte (6) befestigt ist, um einen Eintreibbereich (7) zu bilden, und einem biegbaren Bereich gebildet ist, der aus einem hinteren Bereich der langen Metallplatte (6) gebildet ist, der nach hinten vom hinteren Ende der kurzen Metallplatte (6) vorsteht.

3. Anker nach Anspruch 1 oder 2, dadurch gekennzeichnet, daß der Eintreibbereich (7) des Ankerhauptteils (8) dazu ausgebildet ist, nach hinten von dem biegbaren Element (9) oder biegbaren Bereich vorzustehen, wenn das biegbare Element (9) oder der biegbare Teil um einen Winkel von ungefähr 90° gebogen ist.

4. Anker nach Anspruch 2 oder 3, dadurch gekennzeichnet, daß das biegbare Element (9) oder der biegbare Bereich (6) mit einer Mehrzahl von Löchern ausgebildet ist.

5. Anker nach einem der Ansprüche 1- 4, dadurch gekennzeichnet, daß das biegbare Element (9) oder der biegbare Bereich mit einer Mehrzahl von Ausschnitten (10) ausgebildet ist.

## Revendications

1. Ancrage (4) destiné à être utilisé avec du béton cellulaire, comportant un corps d'ancrage (8) formé d'une paire de plaques métalliques (6) ayant des parties biseautées (5) au bout d'une extrémité de celles-ci, et superposées l'une sur l'autre de sorte que lesdites parties biseautées (5) sont en vis-à-vis l'une de l'autre, lesdites plaques métalliques (6) étant fixées ensemble à leur autre extrémité, pour fournir une partie d'entraînement (7), caractérisé par une feuille de métal allongée (9) ayant une extrémité de celle-ci fixée sur ladite autre extrémité dudit corps d'ancrage (8), une surface latérale de ladite feuille de métal (9) étant superposée sur une surface latérale exposée d'une desdites deux plaques métalliques (6) et soudée sur celle-ci, de sorte que ladite feuille de métal (9) et ledit corps d'ancrage (8) forment un ensemble droit, ladite feuille de métal (9) étant constituée d'un matériau pouvant être plié et étant munie d'une pluralité de trous (11).

2. Ancrage (4) destiné à être utilisé avec du béton cellulaire, comportant un corps d'ancrage (8) formé d'une paire de plaques métalliques (6) ayant des parties biseautées (5) au bout d'une extrémité de celles-ci, et superposées l'une sur l'autre de sorte que lesdites parties biseautées (5) sont en vis-à-vis l'une de l'autre, lesdites plaques métalliques (6) étant fixées ensemble, caractérisé en ce que ledit corps d'ancrage (8) est formé d'une courte plaque métallique (6) et d'une partie avant d'une longue plaque métallique (6) superposée sur ladite courte plaque métallique (6), ladite courte plaque métallique ayant son autre extrémité ou son extrémité arrière fixée sur ladite longue plaque métallique (6) afin de fournir une partie d'entraînement (7), et une partie pouvant être pliée formée au niveau d'une partie arrière de ladite longue plaque métallique (9) faisant saillie vers l'arrière à partir de l'extrémité arrière de ladite courte plaque métallique (6).

3. Ancrage selon la revendication 1 ou 2, caractérisé en ce que ladite partie d'entraînement (7) dudit corps d'ancrage (8) est adaptée pour faire saillie vers l'arrière à partir dudit élément pouvant être plié (9) ou d'une partie lorsque ledit élément pouvant être plié (9), ou ladite partie, est pliée selon un angle d'environ 90°.

4. Ancrage selon la revendication 2 ou 3, caractérisé en ce que ledit élément pouvant plié (9), ou ladite partie (6), est muni d'une pluralité de trous.

5. Ancrage selon l'une quelconque des revendications 1 à 4, caractérisé en ce que ledit élément pouvant être plié (9), ou ladite partie, est muni d'une pluralité de découpes (10).
